# EUROPÄISCHE PATENTSCHRIFT

(11) **EP 0 805 450 B1**
(45) Veröffentlichungstag und Bekanntmachung des Hinweises auf die Patenterteilung: **18.12.2002**
(21) Anmeldenummer: 97201115.9
(22) Anmeldetag: 15.04.1997
(51) Int. Cl.: G11B 27/22, G11B 20/10, G11B 20/24

(54) **Schaltungsanordnung zur Erkennung von Signalpausen**
Circuit for signal pause detection
Circuit à détection des pauses de signaux

(30) Priorität: 03.05.1996 DE 19617651
(43) Veröffentlichungstag der Anmeldung: 05.11.1997
(73) Patentinhaber: Philips Corporate Intellectual Property GmbH, 20099 Hamburg (DE); Koninklijke Philips Electronics N.V., 5621 BA Eindhoven (NL)
(72) Erfinder: Mutz, Erhard, Röntgenstrasse 24, 22335 Hamburg (DE); Knobl, Karl-Heinz, Röntgenstrasse 24, 22335 Hamburg (DE)
(74) Vertreter: von Laue, Hanns-Ulrich, Dipl.-Ing.

(56) Entgegenhaltungen:
- EP-A- 0 471 406
- EP-A- 0 510 876
- DE-B- 2 660 174
- US-A- 3 508 243
- US-A- 4 093 831
- IBM TECHNICAL DISCLOSURE BULLETIN, Bd. 20, Nr. 12, Mai 1978, NEW YORK, US, Seiten 5437-5440, XP002033991 ANONYMOUS: "Amplitude Detection Method for Producing Rate Controlled Speech. May 1978."
- FUNKSCHAU, Bd. 49, Nr. 24, November 1977, MUNCHEN DE, Seiten 1121-1123, XP002033992 M. RIEDEL: "Suchen und Finden"
- PATENT ABSTRACTS OF JAPAN vol. 003, no. 106 (E-135), 7.September 1979 & JP 54 083814 A (SHARP CORP), 4.Juli 1979,
- PATENT ABSTRACTS OF JAPAN vol. 009, no. 090 (P-350), 19.April 1985 & JP 59 218649 A (MATSUSHITA DENKI SANGYO KK), 8.Dezember 1984,
- IBM TECHNICAL DISCLOSURE BULLETIN, Bd. 14, Nr. 6, November 1971, NEW YORK, US, Seiten 1789-1790, XP002033993 ANONYMOUS: "Voice/Burst Tone Detector. November 1971."

## Beschreibung

Die Erfindung betrifft eine Schaltungsanordnung zur Erkennung von Signalpausen eines Audiosignals mit einem Gleichrichtelement, dem eingangsseitig das Audiosignal zugeführt wird, und einem Integratorelement, dem das Ausgangssignal des Gleichrichtelements zugeführt wird.

Eine derartige Schaltungsanordnung ist aus dem Philips IC TEA 0675 bekannt. Diese bekannte Schaltungsanordnung wird dazu verwendet, Signalpausen auf dem Magnetband eines Magnetbandkassettengerätes im Schnellspulbetrieb zu detektieren. Bei dieser bekannten Anordnung wird das Audiosignal zunächst mittels eines Gleichrichtelementes gleichgerichtet, nachfolgend mittels eines Integratorelementes integriert, und einem ersten Komperator zugeführt, dem ein weiteres Integratorelement mit einem zweiten Komperator nachgeschaltet ist. Die Integratorelemente sind mittels Kondensatoren und Widerständen realisiert. Liegt das Eingangssignal des ersten Komparators für eine im wesentlichen durch die Zeitkonstante des zweiten Integratorelementes festgelegte Zeitspanne unterhalb des Schwellwertes des ersten Komperators, so wird eine Pause erkannt.

Die minmal detektierbare Pausendauer einer derartigen Schaltungsanordnung wird durch die Zeitkonstante des zweiten Integratorelementes festgelegt und läßt sich danach nicht mehr ändern.

Es ist Aufgabe der Erfindung, eine benutzerfreundliche und flexible Schaltungsanordnung der eingangs genannten Art zu schaffen.

Diese Aufgabe wird erfindungsgemäß dadurch gelöst, daß eine Steuereinheit vorgesehen ist, welche das Ausgangssignal des Integratorelementes mit einem vorgebbaren Schwellwert vergleicht,
daß die Steuereinheit in Intervallen mit vorgebbarer Intervalldauer ein Schaltmittel ansteuert, welches das Ausgangssignal des Integratorelementes auf einen vorgebbaren Signalbezugswert setzt,
daß die Steuereinheit Signalpausen erkennt, wenn das Ausgangssignal des Integratorelementes eine vorgebbare Zeitspanne unterhalb bzw. oberhalb des Schwellwertes liegt.

Weist das der Schaltungsanordnung während eines Intervalls zugeführte Audiosignal keine Pausen auf, so überschreitet das gleichgerichtete und integrierte Ausgangssignal des Integratorelementes während des Intervalls den Schwellwert und die Steuereinheit erkennt, daß keine Pause aufgetreten ist. Am Ende des Intervalls wird das Ausgangssignal des Integratorelementes auf einen vorgebbaren Signalbezugswert gesetzt, z. B. auf Massepotential, und das Audiosignal wird wieder von neuem mittels Gleichrichtelement und Integratorelement gleichgerichtet und integriert. Bei einem Audiosignal ohne Pausen übersteigt das Ausgangssignal des Integratorelementes im Laufe des folgenden Intervalls wieder den Schwellwert, die Steuereinheit erkennt dadurch, daß keine Pause aufgetreten ist und am Ende des Intervalls wird das Ausgangssignal des Integratorelementes wieder auf den Signalbezugswert gesetzt.
Tritt jedoch eine Pause im Audiosignal auf, so steigt das gleichgerichtete und integrierte Ausgangssignal des Integratorelementes während dieses Intervalles nicht an, überschreitet demzufolge auch nicht den Schwellwert und signalisiert dadurch der Steuereinheit, daß es möglich ist, daß das Audiosignal eine Pause aufweist. Am Ende des Intervalls wird das Ausgangssignal des Integratorelementes wieder auf den Signalbezugswert gesetzt, wobei sich das Ausgangssignal des Integratorelements jedoch während dieses Intervalles infolge der Pause im Audiosignal gegenüber dem Signalbezugswert im wesentlichen nicht verändert hat. Es ist höchstens möglich, daß eine geringfügige Erhöhung des Ausgangssignals des Integratorelementes gegenüber dem Signalbezugswert z.B. infolge eines Rauschsignales aufgetreten ist. Für eine sichere Pausenerkennung werden vorteilhaft mehrere aufeinanderfolgende Intervalle ausgewertet. Erreicht das Ausgangssignal des Integratorelementes auch in einer vorgebbaren Anzahl von nachfolgenden Intervallen nicht den Schwellwert, so erkennt die Steuereinheit dadurch eine Signalpause und kann entsprechende Steuerfunktionen einleiten. Die für eine Pausenerkennung notwendige Anzahl von Intervallen, in denen das Ausgangssignal des Integratorelementes den Schwellwert nicht überschreitet, wird durch eine der Steuereinheit vorgebbare Zeitspanne festgelegt. Diese Zeitspanne ist abhängig von der gewünschten minimalen Pausendauer, die noch detektiert werden soll.

Durch die definierte Setzung des Ausgangssignals des Integratorelementes auf einen vorgebbaren Signalbezugswert in Intervallen mit vorgebbarer Intervalldauer ist es möglich, auch sehr kurze Pausen zu erkennen. Die minimale Pausendauer, die erkannt werden soll, ist mittels der vorgebbaren Intervalldauer und mittels der vorgebbaren Zeitspanne einstellbar.

Mit dieser Schaltungsanordnung kann der dynamische Verlauf eines Audiosignals erfaßt und dargestellt werden, indem das Ausgangssignal des Integratorelementes z.B. zur Ansteuerung eines Balkendisplays verwendet wird.

Eine weitere vorteilhafte Ausgestaltung der Erfindung ist dadurch gekennzeichnet, daß die Steuereinheit den Schwellwert, die Intervalldauer und/oder die Zeitspanne in Abhängigkeit vom Ausgangssignal des Integratorelementes einstellt.

Je größer die Amplitude des Ausgangssignals des Integratorelementes, desto größer wird in der Regel auch der Rauschpegel dieses Signals sein. Mittels der Steuereinheit ist es möglich, den Schwellwert in Abhängigkeit von der Amplitude zu verschieben, d.h. in der Regel wird der Schwellwert mit steigender Amplitude vergrößert. Dadurch wird es möglich, auch in Signalen mit kleiner Amplitude eine sichere Pausenerkennung zu gewährleisten.

Die Bandgeschwindigkeit von Magnetbandkassetten in einem Magnetbandkassettengerät ist insbesondere beim Schnellspulen in der Regel zwischen Bandanfang und Bandende nicht konstant, sondern ändert sich infolge der sich ändernden Bandumwicklung der Wickelteller. Da Magnetköpfe von Magnetbandkassettengeräten im wesentlichen eine Induktivität darstellen, steigt die Amplitude der induzierten Spannung mit zunehmender Bandgeschwindigkeit an und ändert sich daher bei Geschwindigkeitsänderungen des Magnetbandes. Diese Amplitudenänderungen infolge der sich ändernden Bandgeschwindigkeit können durch entsprechende Verschiebungen des Schwellwertes ausgeglichen werden, so daß sie auf die Pausenerkennung keinen Einfluß haben. Ebenfalls kann die minimal detektierbare Pausendauer durch entsprechende Änderungen der Intervalldauer oder der Zeitspanne von Bandgeschwindigkeitsschwankungen unabhängig gemacht werden.

Eine weitere vorteilhafte Ausgestaltung der Erfindung ist dadurch gekennzeichnet, daß der Schwellwert, die Intervalldauer und/oder die Zeitspanne von einer Bedienperson, insbesondere mittels eines EEPROMS oder eines Softwareprogrammes, einstellbar ist.

Wird die Schaltungsanordnung in einem Autoradio bzw. in dem Kassettenlaufwerk eines Autoradios eingesetzt, so ist es z.B. möglich, daß vor Einbau des Autoradios bzw. des Kassettenlaufwerkes der Schwellwert, die Intervalldauer und die Zeitspanne mittels des EEPROMS an den entsprechenden Fahrzeugtyp angepaßt wird. Es ist auch möglich, daß die Bedienperson z.B. des Autoradios oder des Kassettenlaufwerkes mittels einer Bedieneinheit Zugriff auf ein Softwareprogramm hat, mittels dem der Steuereinheit Informationen übermittelt werden können, so daß die Bedienperson den Schwellwert, die Intervalldauer und/oder die Zeitspanne individuell einstellen kann.

Eine weitere vorteilhafte Ausgestaltung der Erfindung ist dadurch gekennzeichnet, daß die Steuereinheit in einen Mikrocomputer integriert ist.

Das Gleichrichtelement und das Integratorelement können mittels diskreter Bauelemente (Dioden und Kondensatoren) einfach realisiert werden. Die Steuereinheit wird mittels eines Mikrocomputers realisiert. Das Ausgangssignal des Integratorelementes wird dem Steuereingang des Mikrocomputers zugeführt und dort mittels eines A/D-Wandlers in ein Digitalsignal umgewandelt. Dadurch wird es möglich, die weiteren Funktionen der Steuereinheit mittels digitaler Signalverarbeitungsalgorithmen bzw. mittels eines Softwareprogrammes durchzuführen. Ein derartiges Softwareprogramm ist sehr flexibel und kann sowohl "on-line" den Schwellwert, die Intervalldauer und die Zeitspanne in Abhängigkeit vom Eingangssignal des Steuereinganges steuern als auch es einer Bedienperson ermöglichen, diese Parameter mittels eines EEPROMS oder einer Bedieneinheit einzustellen.

Eine weitere vorteilhafte Ausgestaltung der Erfindung ist dadurch gekennzeichnet, daß die Steuereinheit, das Gleichrichtelement und das Integratorelement als Softwareprogramm in einen Mikrocomputer integriert sind.

Die Funktionen von Gleichrichtelement und Integratorelement sowie der Steuereinheit können auf einem Mikrocomputer als Softwareprogramm realisiert werden. Eine derartige Anordnung weist eine sehr große Flexibilität auf, benötigt jedoch genügend Rechenkapazität.

Eine weitere vorteilhafte Ausgestaltung der Erfindung ist dadurch gekennzeichnet, daß die Schaltungsanordnung zur Erkennung von Signalpausen auf einem Magnetband eines Magnetbandkassettengerätes verwendet wird.

Mittels der erfindungsgemäßen Schaltungsanordnung kann ein Musiksuchlaufsystem für ein Magnetbandkassettengerät realisiert werden, welches im Schnellspulbetrieb den nachfolgenden Musiktitel aufsucht.

Eine weitere vorteilhafte Ausgestaltung der Erfindung ist dadurch gekennzeichnet, daß die Schaltungsanordnung in einem Autoradio mit RDS zur Erkennung von Signalpausen des Empfangssignals verwendet wird.

Autoradios mit RDS (Radio Data System) - Betrieb suchen selbsttätig die stärkste Empfangsfrequenz für einen eingestellten Sender und führen bei Veränderungen der Fahrzeugposition entsprechende Frequenzwechsel selbsttätig durch. Damit die Bedienperson diese Frequenzwechsel nicht bemerkt, ist es vorteilhaft, diese in Pausen des Empfangssignals zu legen. Mit der erfindungsgemäßen Schaltungsanordnung können derartige Pausen in dem Empfangssignal erkannt werden und für einen entsprechenden Frequenzwechsel genutzt werden. Da mit der erfindungsgemäßen Schaltungsanordnung auch sehr kurze Pausen erkannt werden können, ist es z.B. möglich, in einem Musiktitel mit lauten Bässen die kurzen Pausen zwischen diesen Bässen für einen Frequenzwechsel zu nutzen.

Die minimale Pausendauer, die detektiert werden soll, kann wie oben beschrieben leicht geändert werden. Daher ist es möglich, die Schaltungsanordnung in einem RDS-Autoradio mit Kassettenlaufwerk sowohl zur Erkennung von Signalpausen des RDS- Empfangssignals als auch zur Erkennung von Signalpausen auf dem Magnetband eines Magnetbandkassettengerätes zu verwenden.

Wird der Schaltungsanordnung ein RDS-Signal zugeführt, wird von der Steuereinheit eine sehr kurze minimale Pausendauer gewählt, um auch sehr kurze Pausen für einen Frequenzwechsel nutzen zu können. Wird der Schaltungsanordnung das Signal des Magnetbandkassettengerätes zugeführt, wird eine größere Pausendauer gewählt, um nur die längeren Pausen zwischen zwei Musiktiteln und nicht die kurzen Pausen innerhalb eines Musiktitels zu detektieren.

Die erfindungsgemäße Schaltungsanordnung kann vorzugsweise in einem, Audiogerät, einem Autoradio oder in einem Kassettenlaufwerk eingesetzt werden.

Eine Ausführungsform der Erfindung wird nachfolgend anhand der Zeichnung näher erläutert. Es zeigen:
- Fig. 1: Ein Blockschaltbild der Ausführungsform der Schaltungsanordnung zur Erkennung von Signalpausen eines Audiosignals mit einer Audioquelle, einem Verstärker, einem Gleichrichtelement, einem Integratorelement, einem Schaltmittel und einer Steuereinheit,
- Fig. 2: ein Schaltbild eines Ausführungsbeispiels für die Elemente, Verstärker, Gleichrichtelement, Integratorelement sowie Schaltmittel gemäß Fig. 1,
- Fig. 3: ein Beispiel für den Spannungsverlauf eines Audiosignals im Zeitbereich ohne eine Pause, das von der Audioquelle geliefert wird,
- Fig. 4: das Ausgangsspannungssignal des Integratorelementes im Zeitbereich, wobei die Audioquelle ein Signal gemäß Fig. 3 liefert,
- Fig. 5: ein Beispiel für den Spannungsverlauf eines von der Audioquelle gelieferten Audiosignals im Zeitbereich mit einer Pause,
- Fig. 6: das Ausgangsspannungssignal des Integratorelementes im Zeitbereich, wobei die Audioquelle ein Signal mit einer Pause gemäß Fig. 5 liefert.

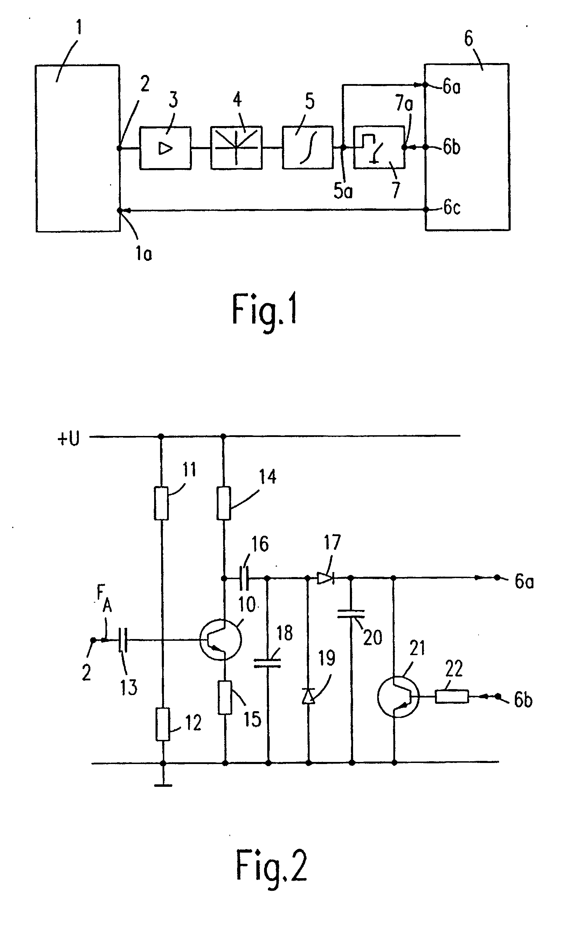

Die schematische Darstellung in Fig. 1 zeigt ein Blockschaltbild einer Schaltungsanordnung zur Erkennung von Signalpausen eines Audiosignals. Die Audioquelle 1 weist einen Signalausgang 2 auf, mittels dessen das Audiosignal in einen Verstärker 3 eingekoppelt wird. Die Audioquelle 1 kann z.B. ein Kassettenlaufwerk für Magnetbandkassetten sein und das Audiosignal auf diesem Magnetband gespeicherte Musiktitel, welche durch Pausen voneinander getrennt sind, die von der erfindungsgemäßen Schaltungsanordnung erkannt werden sollen. Als weiteres Beispiel für die Audioquelle 1 ist ein RDS (Radio Data System) Tuner eines Autoradios denkbar, wobei das Audiosignal in diesem Beispiel das empfangene Signal des Tuners ist. Tuner mit einem RDS System suchen sich selbstständig für einen von der Bedienperson eingestellten Sender die beste Empfangsfrequenz und führen bei sich ändernder Fahrzeugposition entsprechende Frequenzwechsel selbstständig durch. Damit die Bedienperson diese Frequenzwechsel nicht hört, ist es wünschenswert, diese in Pausen des Sendeprogrammes durchzuführen. Eine derartige Pausenerkennung kann ebenfalls mit der erfindungsgemäßen Schaltungsanordnung durchgeführt werden.

Das von der Audioquelle 1 gelieferte Audiosignal wird in dem Verstärker 3 verstärkt und nachfolgend einem Gleichrichtelement 4 zugeführt. Ist die Amplitude des von der Audioquelle 1 gelieferten Audiosignals genügend groß, so kann auf den Verstärker 3 verzichtet werden. Das mittels des Gleichrichtelementes 4 gleichgerichtete Audiosignal wird einem Integratorelement 5 zugeführt, welches einen Integratorausgang 5a aufweist. Der Integratorausgang 5a ist mit einem Steuereingang 6a einer Steuereinheit 6 und mit einem Schaltmittel 7 gekoppelt. Die Steuereinheit 6 weist einen ersten Steuerausgang 6b auf, der mit einem Steuereingang 7a des Schaltmittels 7 gekoppelt ist. Wird von der Steuereinheit 6 mittels des ersten Steuerausgangs 6b ein Steuersignal bzw. ein Steuerimpuls an den Steuereingang 7a des Schaltmittels 7 übertragen, so wird der Signalausgang 5a des Integratorelemetes 5 mit einem vorgebbaren Signalbezugswert, z.B. mit Massepotential gekoppelt. Die Steuereinheit 6 weist einen zweiten Steuerausgang 6c auf, der mit einem Steuereingang 1a der Audioquelle 1 gekoppelt ist.

Die Steuereinheit 6 kann z.B. mittels eines Mikrocomputers realisiert werden. Das Gleichrichtelement 4, das Integratorelement 5 sowie das Schaltmittel 7 können mittels diskreter Bauelemente realisiert werden. Es ist jedoch auch möglich, das Gleichrichtelement 4, das Integratorelelement 5 und das Schaltmittel 7 als Softwareprogramm in den Mikrocomputer mitzuintegrieren.

Das dem Steuereingang 6a der Steuereinheit 6 zugeführte analoge Ausgangssignal des Integratorelementes 5 wird in der Steuereinheit 6 zunächst mittels eines nicht dargestellten AD-Wandlers in ein Digitalsignal gewandelt. In die Steuereinheit 6 ist ein Steuerprogramm implementiert, mittels dessen das digitalisierte Eingangssignal des Steuereinganges 6a weiterverarbeitet wird. Das Steuerprogramm der Steuereinheit 6 vergleicht das digitalisierte Eingangssignal des Steuereinganges 6a mit einem vorggebbaren Schwellwert. Dieser Schwellwert kann z.B. in einem nicht dargestellten EEPROM abgelegt sein, auf das die Steuereinheit 6 Zugriff hat, oder der Schwellwert kann der Steuereinheit von einer Bedienperson mittels einer nicht dargestellten Eingabeeinheit übermittelt werden. Ferner ist es möglich, daß das Steuerprogramm den Schwellwert in Abhängigkeit von der Amplitude oder anderer Parameter des Eingangssignals des Steuereinganges 6a selbsttätig steuert. Ein entsprechender in das Steuerprogramm implementierter Algorithmus ist vorzugsweise so ausgelegt, daß der Schwellwert mit steigender Eingangsamplitude des Eingangssignals des Steuereinganges 6a erhöht wird.
Das digitalisierte Eingangssignal des Steuereinganges 6a kann z.B. auch zur Ansteuerung eines Balkendisplays verwendet werden, um den dynamischen Verlauf des Audiosignals darzustellen.

Das in die Steuereinheit 6 implementierte Steuerprogramm steuert über den ersten Steuerausgang 6b auch die Schaltvorgänge des Schaltmittels 7. In Intervallen mit vorgebbarer Intervalldauer wird von der Steuereinheit 6 ein Steuerimpuls an den Steuereingang 7a des Schaltmittels 7 übermittelt, wodurch das Schaltmittel 7 den Integratorausgang 5a mit einem festen Bezugspotential, vorzugsweise Massepotential koppelt. Weist das Audiosignal keine Pausen auf, so überschreitet das . Ausgangssignal des Integratorelementes 5 während eines Intervalls den Schwellwert, und das in der Steuereinheit 6 implementierte Steuerprogramm erkennt, daß in dem Audiosignal keine Pause aufgetreten ist. Tritt in dem Audiosignal jedoch eine Pause auf, dann steigt das Ausgangssignal des Integratorelementes 5 während der darauffolgenden Intervalle, die innerhalb der Pause liegen, nicht an und überschreitet daher auch den Schwellwert nicht mehr. Nach einer vorgebbaren, die minimale Pausenlänge definierenden Zeitspanne gibt das Steuerprogramm einen Impuls oder ein Signal über den zweiten Steuerausgang 6c an den Steuereingang 1a der Audioquelle 1 ab, wodurch der Audioquelle angezeigt wird, daß die Steuereinheit 6 eine Pause in dem Audiosignal erkannt hat. Sowohl die Intervalldauer, mit der die Steuereinheit 6 das Schaltmittel 7 ansteuert als auch die Zeitspanne, nach der die Steuereinheit 6 Signalpausen erkennt und der Audioquelle 1 übermittelt, können mittels des Steuerprogrammes in Abhängigkeit vom Eingangssignal des Steuereinganges gesteuert werden. Ferner ist es möglich, den Schwellwert, die Intervalldauer und die Zeitspanne von einer Bedienperson einstellen zu lassen, z.B. mittels eines EEPRÖMS, auf den die Steuereinheit 6 Zugriff hat oder mittels einer nicht dargestellten Bedieneinheit, die dem Steuerprogramm die Einstellinformationen übermittelt.

Fig. 2 zeigt ein Schaltbild für ein Ausführungsbeispiel des Verstärkers 3, des Gleichrichtelementes 4, des Integratorelementes 5 sowie das Schaltmittel 7 aus Fig. 1.

Es ist ein Transistor 10 vorgesehen, dessen Basis über einen Widerstand 11 mit einem positiven Gleichspannungspotential +U und über einen Widerstand 12 mit einem Bezugspotential gekoppelt ist. Der Basis des Transistors 10 wird ein Audiosignal F_{A} über einen Kondensator 13 zugeführt. Der Kollektor des Transistors 10 ist über einen Widerstand 14 mit dem positiven Gleichspannungspotential +U gekoppelt und der Emitter des Transistors 10 ist über einen Widerstand 15 mit dem Bezugspotential gekoppelt. Der Kollektor des Transistors 10 ist seriell über einen Kondensator 16 sowie eine Diode 17 mit dem Steuereingang 6a der Steuereinheit 6 aus Fig. 1 gekoppelt. Die Kopplungsstrecke zwischen dem Kondensator 16 und der Diode 17 ist über einen Kondensator 18 mit dem Bezugspotential gekoppelt und parallel dazu mit einer Diode 19 ebenfalls mit dem Bezugspotential gekoppelt. Der Steuereingang 6a ist über einen Kondensator 20 mit dem Bezugspotential gekoppelt. Es ist ein Transistor 21 vorgesehen, dessen Kollektor mit dem Steuereingang 6a gekoppelt ist, dessen Emitter mit dem Bezugspotential gekoppelt ist, und dessen Basis über einen Widerstand 22 mit dem Steuerausgang 6b der in Fig. 1 dargestellten Steuereinheit 6 gekoppelt ist.

Das Audiosignal F_{A} gelangt über den Kondensator 13 auf die Basis des Transistors 10, der als Verstärker fungiert. Das verstärkte Ausgangssignal wird über die Dioden 17 und 19 gleichgerichtet und über den Kondensator 20 integriert. Der parallel zu dem Kondensator 20 geschaltete Transistor 21 fungiert als Schalter, der den Kondensator 20 zu vorgebbaren Zeitpunkten entlädt, wenn die Basis des Transistors 21 vom Steuerausgang 6b einen Steuerimpuls bzw. ein Steuersignal erhält. Das gleichgerichtete Signal wird dem Steuereingang 6a zugeführt. Der Kondensator 13 sowie die Kondensatoren 16 und 18 verleihen der Schaltung Bandpaßcharakter, um die Auswirkungen von Störungen, wie z.B. Rauschen, zu minimieren. Wird die Schaltungsanordnung z.B. zur Erkennung von Pausen auf einem Magnetband eines Magnetbandkassettengerätes eingesetzt, so wird während des Kassettenschnellvorlaufs oder des Schnellrücklaufs der Kondensator 20 beispielsweise alle 10msec für einige µsec mittels des Transistors 21, der vom Steuerausgang 6b der Steuereinheit 6 angesteuert wird, entladen. Unmittelbar danach wird die Analogspannung am Steuereingang 6a der Steuereinheit 6 vom nicht dargestellten A/D-Wandler der Steuereinheit 6 gemessen. Während einer Signalpause des Analogsignals F_{A} bleibt das Analogsignal am Kondensator 20 nach der Entladung durch den Transistor 21 auf einem Pegel, der unterhalb des in dem Steuerprogramm festgelegten Schwellwertes liegt, so daß die Steuereinheit 6, wenn dieser Wert während der vorgebbaren Zeitspanne unterschritten bleibt, die Signalpause erkennt.

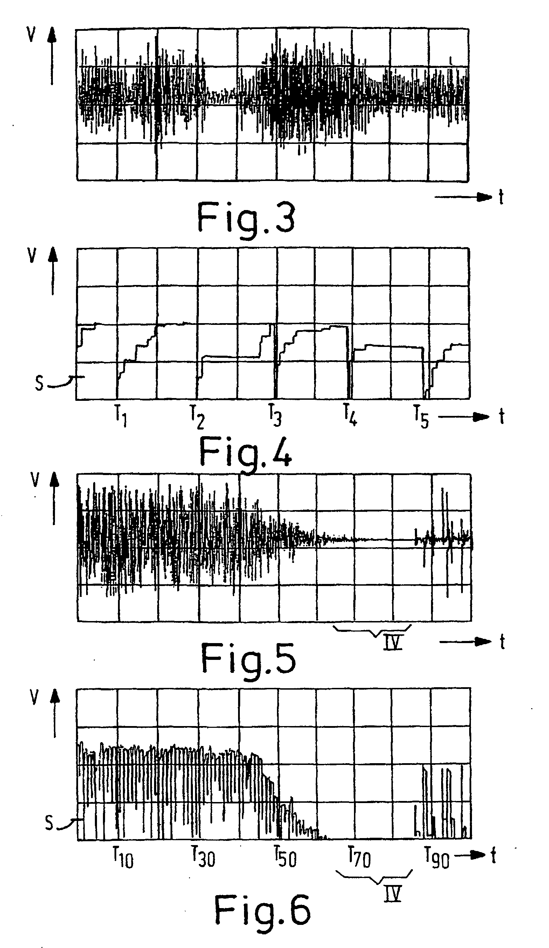

Fig. 3 zeigt den Spannungsverlauf V eines Audiosignals, das keine Signalpausen aufweist über einer Zeitachse t.

Fig. 4 zeigt den Spannungsverlauf V des Eingangssignals des Steuereinganges 6a der Steuereinheit 6 über der Zeitachse t, wenn das Audiosignal gemäß Fig. 3 einer erfindungsgemäßen Schaltungsanordnung gemäß den Figuren 1 und 2 zugeführt wird.

Zu den Zeitpunkten T₁, T₂, T₃, T₄ und T₅ wird der Integratorausgang 5a mittels des Schaltmittels 7 mit Bezugspotential gekoppelt bzw. der Kondensator 20 mittels des Transistors 21 mit Bezugspotential gekoppelt und dadurch entladen. Zwischen diesen einzelnen Zeitpunkten T₁, T₂, T₃, T₄ und T₅ wird das Audiosignal aufintegriert und das Signal am Steuereingang 6a der Steuereinheit 6 steigt diskontinuierlich an und überschreitet in jedem der Intervalle zwischen den einzelnen Zeitpunkten T1, T2, T3, T4 und T5 den Schwellwert S.

Fig. 5 zeigt den Spannungsverlauf V eines Audiosignals, das im Bereich IV eine Signalpause aufweist über der Zeitachse t.

Fig. 6 zeigt den Spannungsverlauf des Eingangssignals des Steuereinganges 6a der Steuereinheit 6 über der Zeitachse t, wenn ein Audiosignal gemäß Fig. 5 einer erfindungsgemäßen Schaltungsanordnung gemäß den Fig. 1 und 2 zugeführt wird. Gegenüber der in Fig. 4 gezeigten Darstellung ist in Fig. 6 für die Zeitachse t eine andere Auflösung gewählt. In Richtung der Zeitachse t erfolgen in Fig. 6 je Kästchen 10 Entladungen des Kondensators 20 über den Transistor 21 auf das Bezugspotential (Fig. 2) bzw. Kopplungen des Ausganges 5a des Integratorelementes 5 mittels des Schaltmittels 7 auf das Bezugspotential (Fig.1), d.h. beispielsweise zwischen den Zeitpunkten T₁₀ und T₃₀ treten 20 derartiger Entladungen auf. Es ist gut zu erkennen, daß im Bereich der Pause IV das Ausgangssignal des Integratorelementes nahezu konstant Null ist und der Schwellwert S während der einzelnen Intervalle dementsprechend unterschritten bleibt. Je nach Definition der Pausenlänge, die im Steuerprogramm festgelegt ist, wird nach einer bestimmten Anzahl von Intervallen, in denen der Schwellwert S nicht überschritten wird, eine Pause erkannt.

## Patentansprüche

1. Schaltungsanordnung zur Erkennung von Signalpausen eines Audiosignals mit einem Gleichrichtelement (4; 17, 19), dem eingangsseitig das Audiosignal zugeführt wird, und einem Integratorelement (5; 20), dem das Ausgangssignal des Gleichrichtelementes (4; 17, 19) zugeführt wird,
**dadurch gekennzeichnet, daß** eine Steuereinheit (6) vorgesehen ist, welche das Ausgangssignal des Integratorelementes (5; 20 ) mit einem vorgebbaren Schwellwert vergleicht,
daß die Steuereinheit (6) in Intervallen mit vorgebbarer Intervalldauer ein Schaltmittel (7; 21) ansteuert, welches das Ausgangssignal des Integratorelementes (5; 20) auf einen vorgebbaren Signalbezugswert setzt,
daß die Steuereinheit (6) Signalpausen erkennt, wenn das Ausgangssignal des Integratorelementes eine vorgebbare Zeitspanne unterhalb bzw. oberhalb des Schwellwertes liegt.

2. Schaltungsanordnung nach Anspruch 1,
**dadurch gekennzeichnet, daß** die Steuereinheit (6) den Schwellwert, die Intervalldauer und/oder die Zeitspanne in Abhängigkeit vom Ausgangssignal des Integratorelementes (5; 20) einstellt.

3. Schaltungsanordnung nach Anspruch 1,
**dadurch gekennzeichnet, daß** der Schwellwert, die Intervalldauer und/oder die Zeitspanne von einer Bedienperson, insbesondere mittels eines EEPROMS oder eines Softwareprogrammes, einstellbar ist.

4. Schaltungsanordnung nach einem der Ansprüche 1 bis 3,
**dadurch gekennzeichnet, daß** die vorgebbare Zeitspanne wenigstens zwei Intervalle umfaßt.

5. Schaltungsanordnung nach einem der Ansprüche 1 bis 4,
**dadurch gekennzeichnet, daß** die Steuereinheit (6) in einen Mikrocomputer integriert ist.

6. Schaltungsanordnung nach einem der Ansprüche 1 bis 5,
**dadurch gekennzeichnet, daß** die Steuereinheit (6), das Gleichrichtelement (4; 17, 19) und das Integratorelement (5; 20) als Softwareprogramm in einen Mikrocomputer integriert sind.

7. Schaltungsanordnung nach einem der Ansprüche 1 bis 6,
**dadurch gekennzeichnet, daß** die Schaltungsanordnung zur Erkennung von Signalpausen auf einem Magnetband eines Magnetbandkassettengerätes verwendet wird.

8. Schaltungsanordnung nach einem der Ansprüche 1 bis 7,
**dadurch gekennzeichnet, daß** die Schaltungsanordnung in einem Autoradio mit RDS zur Erkennung von Signalpausen des Empfangssignals verwendet wird.

9. Audiogerät mit einer Schaltungsanordnung nach einem der Ansprüche 1 bis 8.

10. Kassettenlaufwerk mit einer Schaltungsanordnung nach einem der Ansprüche 1 bis 8.

## Claims

1. A circuit arrangement for the detection of signal pauses in an audio signal, comprising a rectifier element (4; 17, 19), to whose input side the audio signal is applied, and an integrator element (5; 20), to which the output signal of the rectifier element (4; 17, 19) is applied,
**characterized in that** there is provided a control unit (6) which compares the output signal of the integrator element (5; 20) with a predetermined threshold value,
**in that** the control unit (6) controls a switching means (7; 21) in intervals of predetermined interval length, which switching means sets the output signal of the integrator element (5; 20) to a predetermined signal reference value,
**in that** the control unit (6) detects signal pauses when the output signal of the integrator element is smaller than or greater than the threshold value for a predetermined period of time.

2. A circuit arrangement as claimed in Claim 1,
**characterized in that** the control unit (6) sets the threshold value, the interval length and/or the period of time in dependence upon the output signal of the integrator element (5; 20).

3. A circuit arrangement as claimed in Claim 1,
**characterized in that** the threshold value, the interval length and/or the period of time can be set by a user, particularly by means of an EEPROM or a software program.

4. A circuit arrangement as claimed in one of the Claims 1 to 3,
**characterized in that** the predetermined period of time comprises at least two intervals.

5. A circuit arrangement as claimed in one of the Claims 1 to 4,
**characterized in that** the control unit (6) is integrated with a microcomputer.

6. A circuit arrangement as claimed in one of the Claims 1 to 5,
**characterized in that** the control unit (6), the rectifier element (4; 17, 19) and the integrator element (5; 20) are integrated with a microcomputer as a software program.

7. A circuit arrangement as claimed in one of the Claims 1 to 6,
**characterized in that** the circuit arrangement is used for the detection of signal pauses on a magnetic tape in a magnetic-tape-cassette apparatus.

8. A circuit arrangement as claimed in one of the Claims 1 to 7,
**characterized in that** the circuit arrangement is used for detecting signal pauses of the signal received in a car radio with RDS.

9. An audio apparatus including a circuit arrangement as claimed in one of the Claims 1 to 8.

10. A cassette deck including a circuit arrangement as claimed in one of the Claims 1 to 8.

## Revendications

1. Circuit de reconnaissance de pause de signaux d'un signal audio avec un élément redresseur (4, 17, 19) auquel est amené côté entrée le signal audio et un élément intégrateur (5 ; 20) auquel est amené le signal de sortie de l'élément redresseur (4 ; 17 ; 19) **caractérisé en ce qu'**il est prévu une unité de commande (6) qui compare le signal de sortie de l'élément intégrateur (5; 20) à une valeur seuil à déterminer préalablement, que l'unité de commande (16) excite dans des intervalles d'une durée d'intervalle à déterminer préalablement un moyen de commutation (7; 21) qui amène le signal de sortie de l'élément intégrateur (5; 20) à une valeur de référence de signal à déterminer préalablement, que l'unité de commande (6) reconnaît des pauses de signal lorsque le signal de sortie de l'élément intégrateur se trouve pendant un intervalle de temps à déterminer préalablement au-dessus ou en dessous de la valeur seuil.

2. Circuit selon la revendication 1, **caractérisé en ce que** l'unité de commande (6) règle la valeur seuil, la durée de l'intervalle et/ou l'intervalle temporel en fonction du signal de sortie de l'élément intégrateur (5; 20).

3. Circuit selon la revendication 1, **caractérisé en ce que** la valeur seuil, la durée d'intervalle et/ou l'intervalle temporel sont réglables par un opérateur, en particulier à l'aide d'une EEPROM ou d'un programme logiciel.

4. Circuit selon l'une des revendications 1 à 3, **caractérisé en ce que** l'intervalle de temps à déterminer préalablement comprend au moins deux intervalles.

5. Circuit selon l'une des revendications 1 à 4, **caractérisé en ce que** l'unité de commande (6) est intégrée dans un micro-ordinateur.

6. Circuit selon l'une des revendications 1 à 5, **caractérisé en ce que** l'unité de commande (6), l'élément redresseur (4, 17 ; 19) et l'élément intégrateur (5 ; 20) sont intégrés comme un programme logiciel dans un micro-ordinateur.

7. Circuit selon l'une des revendications 1 à 6, **caractérisé en ce que** le circuit est utilisé pour la reconnaissance de pauses de signaux sur une bande magnétique d'un magnétophone à cassette.

8. Circuit selon l'une des revendications 1 à 7, **caractérisé en ce que** le circuit est utilisé dans un autoradio avec RDS pour la reconnaissance de pause de signaux du signal de réception.

9. Appareil audio avec un circuit selon l'une des revendications 1 à 8.

10. Mécanisme d'entraînement de cassettes avec un circuit selon l'une des revendications 1 à 8.
